Europäisches Patentamt

European Patent Office

Office européen des brevets

(11) Veröffentlichungsnummer : **0 147 480**
**B1**

(12) **EUROPÄISCHE PATENTSCHRIFT**

(45) Veröffentlichungstag der Patentschrift :
15.03.89

(51) Int. Cl.⁴ : **G 05 B 19/42**

(21) Anmeldenummer : **83113091.9**

(22) Anmeldetag : **24.12.83**

(54) Einrichtung zur Ermittlung von Soll-Werten für den Werkstücktransport einer Mehrstufenpresse.

(43) Veröffentlichungstag der Anmeldung :
**10.07.85 Patentblatt 85/28**

(45) Bekanntmachung des Hinweises auf die Patenterteilung : **15.03.89 Patentblatt 89/11**

(84) Benannte Vertragsstaaten :
**DE FR GB IT SE**

(56) Entgegenhaltungen :
**DE--A-- 2 450 477**
**US--A-- 3 624 371**
**US--A-- 3 668 498**
**US--A-- 3 878 983**
**US--A-- 4 208 675**

(73) Patentinhaber : **L. SCHULER GmbH**
**Bahnhofstrasse 41 - 67 Postfach 1222**
**D-7320 Göppingen (DE)**

(72) Erfinder : **Schneider, Franz**
**Schottstrasse 14/1**
**D-7320 Göppingen (DE)**
Erfinder : **Braitinger, Helmut**
**Helferichstrasse 5**
**D-7320 Göppingen (DE)**
Erfinder : **Feinauer, Otto**
**Trübauer Weg 68**
**D-7320 Göppingen (DE)**

**Beschreibung**

Die Erfindung betrifft eine Einrichtung zur Ermittlung von Soll-Werten für den vermittels Transferschienen durch zuführenden Transport von Werkstücken in einer Mehrstufenpresse gemäß dem Oberbegriff des Anspruchs 1.

Mehrstufenpressen dienen der Umformung von Blechstreifen oder Blechzuschnitten in Formteile (Werstücke) unter Verwendung einer Mehrzahl an Werkzeugen. Der Transport des Bleches zur ersten Bearbeitungsstufe, der Transport der Werkstücke zwischen den Bearbeitungsstufen und ggf. die Ausgabe der Werkstücke aus der Presse erfolgt vermittels pressegetriebener bzw. bei Fremdantrieb in der Bewegung dann pressegesteuerter Transferchienen. Die Transferschienen tragen den Werkstückabmessungen angepaßte Greifzeuge, von denen zumindest das Greifzeug oder das Greifzeugpaar für den Transport aus der Vorstufe, einer Zentrierstufe, o.dgl., ansteuerbar, aktiv wirkend ausgebildet ist.

Beim Einrichten der Mehrstufenpresse auf ein anderes Werkstück sind Werkzeuge und Greifzeuge auszutauschen. Das Einrichten von Werkzeugen und Greifzeugen, das Anpassen der Greifzeuge bei neu ins Fertigungsprogramm aufgenommenen Werkstücken sowie allgemein die werkzeugwechselbedingten, neu vorzunehmenden Einstellungen der Transportbewegungen der Transferschienen hinsichtlich der Bewegungsgrößen und Bewegungsmaße, Geschwindigkeit und Beschleunigung ist sehr zeitaufwendig und mit einem entsprechend langen Stillstand der Mehrstufenpresse verbunden. Die Rentabilität gerade der Mehrstufenpressen liegt wegen der sehr hohen Anschaffungskosten in einer hohen Ausstoßquote, einem hohen Nutzungsgrad.

Es ist zwar zur Verringerung der Stillstandszeiten bekannt, die Werkzeuge auf aus dem Arbeitsbereich der Presse herausfahrbaren Tischen einzurichten. Hierdurch ist es jedoch nicht möglich, die Zeiten für das Einrichten der Greifzeuge und der werkstückspezifischen Transferbewegungen zu verringern. Diese Tätigkeiten müssen nach wie vor an der Presse im Schleichgang ausgeführt werden. Da diese Einrichtzeiten jedoch den größten Anteil an der Gesamteinrichtzeit ausmachen, kommt es nach wie vor zu langen Stillstandszeiten der Mehrstufenpresse. Darüber hinaus kommt es häufig beim Probelauf als Folge von Montage- und Einstellfehlern sowie aus Unachtsamkeit und Unübersichtlichkeit zu Crash-Situationen, die zu Beschädigungen an Werkzeug, Transfereinrichtung und Pressenaufbau führen können. Auch ein mehrmaliges Wiederholen der einzustellenden Bewegungen zur Optimierung der Bewegungsgrößen des Transfers und der Greiferabsmessungen und -anordnungen erhöhen die Stillstandzeit der Mehrstufenpresse. Beim Einstellen laufen alle Pressenabläufe mit, so daß der Zugang zum Werkzeug nur zeitbegrenzt ist und der Ablagevorgang sowie der Entnahmevorgang im Werkzeuguntertail nur bedingt kontrollierbar sind.

Aus der DE-A1- 24 50 477 ist es bekannt, an den Transferschienen eine zusätzliche Vorschubeinrichtung angreifen zu lassen, die den dann abzukuppelnden Vorschubantrieb der Presse übernimmt. Hierbei wird zwar die Zugänglichkeit zu dem Arbeitsbereich während der Einstellung des Transfers und der Greifzeuge ermöglicht ; alle Einstellungen sind jedoch beim Pressenstillstand vorzunehmen und die Probeläufe sind in der Presse bei Zwanglauf aller Antriebsmittel durchzuführen.

In der DE-A1- 25 30 261 wird eine Einrichtung zum Lackieren von Karosserieteilen beschrieben. Diese Einrichtung weist einen Automaten auf mit einer Farbspritzpistole, die auf Abstand zu einem Modell und auf dieses Farbstoff auftragend über die Konturen flächendeckend manuell zu verfahren ist. Die Bewegungen und die während dieser Bewegungen verbrauchten Farbstoffmengen werden über Geber festgestellt und für die Behandlung von Serienteilen in einem Programm aufbereitet. Hierzu umfaßt die Einrichtung weiterhin eine die aufbereiteten Werte verwertende zweite Farbspritzanlage, im wesentlichen bestehend aus einer mechanischen Baugruppe, die die stützenden Funktionen für eine Farbspritzpistole umfaßt, eine hydraulische Baugruppe für die Verstellmöglichkeiten der mechanischen Baugruppe und eine elektrische Baugruppe, die die für den Farbauftrag notwendigen Arbeitsabläufe wiederholt nach Speicherprogramm ausführen läßt. Die sich durch Abfahren der Kontur des Modelles ergebenden Soll-Werte können durch mehrmaliges Überfahren des Modelles korrigiert werden. Diese Einrichtung geht von der Überlegung aus zu verhindern, daß die Bedienperson die Farbspritzanlage nicht in dem Raum einrichtet und bedient, in dem die Serienteile zu lackieren sind. Die Farbspritzanlage fährt die Bewegungen der manuell geführten Farbspritzpistole in jede frei wählbare Stellung nach und nicht innerhalb durch Achsen vorgegebener Richtungen.

Desweiteren ist aus der US-A-3, 668, 498 eine Transfervorrichtung bekannt zum Fördern von Werkstücken zwischen Bearbeitungsmaschinen, z.B. zwischen Pressen. Jedes Werkstück ist entlang eines Transportweges bewegbar. Der Transportweg ist in Abhängigkeit von Werkstück und Bearbeitung durch Transport- und Steuermittel vorgebbar. Die Bewegung der Werkstückhalter in dem ermittelten Weg ist hierbei mit dem Arbeitsspiel der Bearbeitungsmaschine koordiniert. Das Einrichten der Transferbewegung erfordert eine Unterbrechung der Fertigung.

In der US-A-3, 624, 371 wird eine Einrichtung zum Kopierfräsen gezeigt, ohne den Umsetzvorgang eines Werkstücks zu beschreiben. Hierbei werden die Außenformen eines Musterstücks abgetastet. Die hierfür notwendigen Bewegungen werden datermäßig aufbereitet und gespeichert. Die gespeicherten Werte dienen als Vorgabe für die Werkstückbearbeitung. Die Bewegungen von Abtastkopf und Werkzeug erfolgen in drei Achsen.

Ausgehend von einer Einrichtung nach der DE-A1- 24 50 477 liegt der Erfindung die an sich bereits neue Aufgabe zugrunde, Soll-Werte für den Werkstücktransfer in einer Mehrstufenpresse pressenunabhängig zu ermitteln, innerhalb minimaler und maximaler Werte zur Optimierung des Ablaufes des Transfers und der Zeitpunkte des Einsetzens der Werkzeugautomation und der Greiferaktivitäten einzustellen unter Berücksichtigung werkzeug- und pressenspezifischer Erfordernisse und die so gefundenen Werte für eine Eingabe in die Mehrstufenpresse aufzubereiten und bereitzustellen.

Die Aufgabe wird nach der Erfindung gelöst durch die Merkmale des Kennzeichens des Anspruchs 1.

Die Merkmale der weiteren Ansprüche stellen bevorzugte Ausgestaltungen der Erfindung dar.

Vorteile der Erfindung ergeben sich daraus, daß beim Aufruf einer Achse zum Einstellen und Optimieren einer Bewegung weitere Antriebe oder die Mittel dür die Werkzeugautomation und den Greiferbetrieb nicht zwangläufig mitlaufen müssen.

Weitere Vorteile sind dadurch gegeben, daß die Mittel zur Simulation der Bewegungen der Presse nur für einen Teil des Werkzeugsatzes, z.B. für drei von sechs Werkzeugen ausgelegt zu sein brauchen; daß die eingestellten Werte für Wegemaß, Geschwindigkeit und Beschleunigung für das Einrichten der restlichen (hier drei) Werkzeuge und Greifzeuge übertragbar sind. Bei der Einrichtung der Werkzeuge, der Greifer und des Transportes sind zunächst Platzverhältnisse, wie sie beim Einrichten an der Mehrstufenpresse hinderlich und zu berücksichtigen wären, außer Acht zu lassen, so daß eine leichte Zugänglichkeit zu allen Einstellbereichen gewährleistet ist. Das Rahmengestell der Einrichtung ist im Vergleich zur Mehrstufenpresse massearm und somit örtlich verstellbar. Es können Fehler des Transfers, des Werkzeugaufbaues u.dgl. erfaßt und berücksichtigt werden. Alle Bewegungen des Transportes, der Werkzeugautomation und der Greifertätigkeit werden über die speicherprogrammierbare Steuerung zu einem optimalen Bewegungszyklus erfaßt.

Anhand der in der Zeichnung dargestellten bevorzugten Ausführungsform (Ausführungsbeispiel) soll die Erfindung im folgenden beschrieben werden. Dabei zeigen:

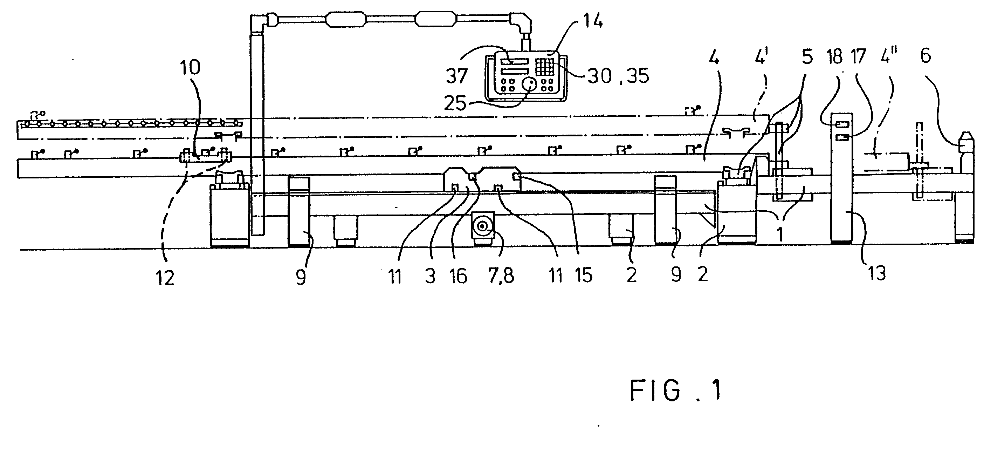

Fig. 1 einen pressenunabhängigen Gestellaufbau in einer Vorderansicht auf die Längserstreckung und

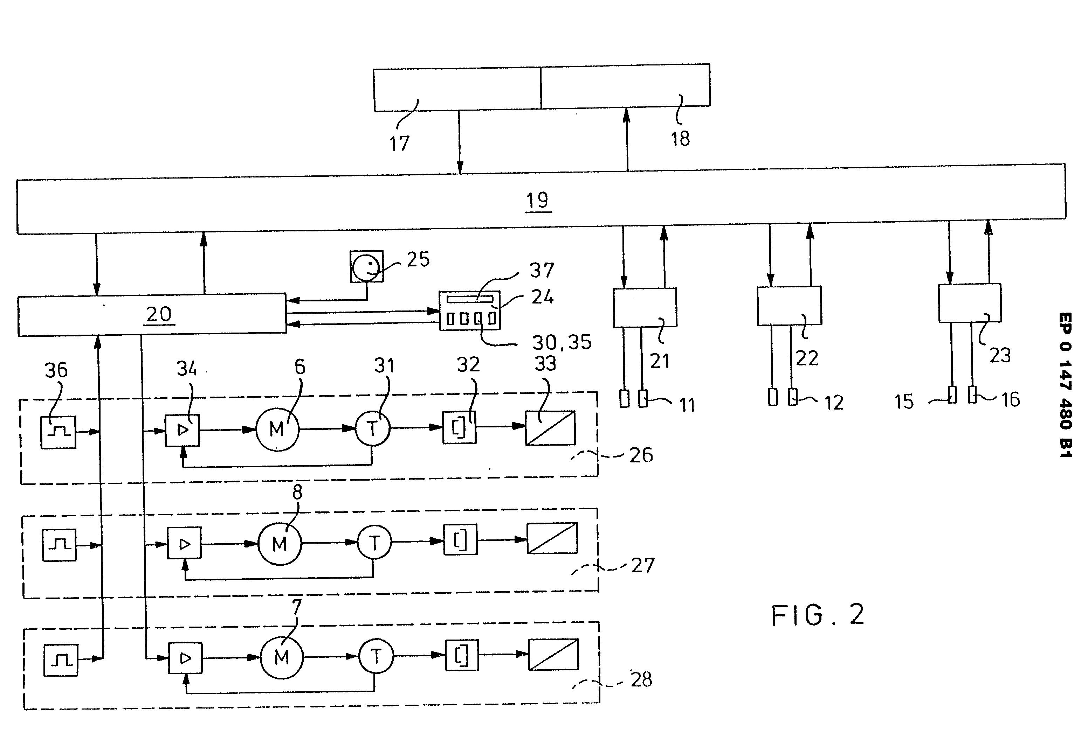

Fig. 2 das Blockschaltbild der elektrischen/elektronischen Steuerung der Einrichtung nach Fig. 1.

Der Gestellaufbau umfaßt eine Rahmenkonstruktion 1, die über höhenjustierbare und schwingungsisolierende Nivellierschuhe 2 auf dem Flur aufgestellt, ggf. im Flur über Fundamentbefestigungselemente arretiert ist. In der Rahmenkonstruktion sind die Werkzeugunterteile eines Teiles des Werkzeugsatzes untergebracht und es ist ein Werkzeugunterteil 3 beispielhaft in der Zeichnung dargestellt. Beidseitig zu den Werkzeugunterteilen und sich in der Längsausdehnung des Gestellaufbaues erstreckend sind zwei Transferschienen 4 angeordnet, von denen nur die vor den Werkzeugunterteilen befindliche Transferschiene erkennbar ist. Die Transferschienen 4 sind in weiteren und mit 4' bzw. 4" gekennzeichneten Stellungen durch Strichpunktlinien andeutungsweise gezeigt. In diese Stellungen 4' und 4" und darüber hinaus in eine hier nicht dargestellte werkstückerfassende Stellung, in die Greifzeuge im Zuge des Werkstücktransfers in Führungsmitteln 5 zu führen sind, werden die Transferschienen synchron zueinander über einen Zentralantrieb, der über je eine wahlweise schaltbare Kupplung je Bewegungsachse auf die Transferschienen wirkt oder wie gezeigt über einen Motorantrieb je Achse, bewegt. Es ist andeutungshalber ein Greifzeug 10 gezeigt. Die Greifzeuge entsprechen den aus Mehrstufenpressen bekannten aktiven oder passiven Greifzeugen. Es besteht so die Möglichkeit, die an den Transferschienen zum Ermitteln der Soll-Werte eingerichteten Greifzeuge mit und auch ohne Transferschienen in die Mehrstufenpresse einzubringen. Ausgehend von den erforderlichen Transferbewegungen in z.B. drei Achsen — unter Achsen sind die Bewegungen in senkrecht zueinander stehenden Bewegungsrichtungen zu verstehen — sind hier drei Motore vorgesehen, von denen der Motor 6 dem Längstransport, Motor 7 dem Heben und Senken und ein hinter dem Motor 7 befindlicher Motor 8 der Öffnen-Schließbewegung (der Querbewegung) der Transferschienen 4 dient. Die Übertragungsmittel der Antriebsbewegungen der Transferschienen 4 wie Bremsmittel 32, Bewegungsumlenkmittel 33 sowie Führungsmittel 5 für die Transferschienen sind aus Mehrstufenpressen bekannt und hier aus Übersichtsgründen nicht näher dargestellt worden. Für die Werkzeugautomation und die Greiferklemm-Öffnenbewegungen sind Druckaggregate 9 vorgesehen. Auch auf die Darstellung von Steuerleitungen und Steuerventilen ist verzichtet worden, da diese Mittel und ihre steuerungsmäßige Anordnung ohne weiteres vorstellbar sind. Die Werkzeugautomation umfaßt u. a. Werkstückauswerfer 11, die von den Druckaggregaten 9 über ansteuerbare Ventile beaufschlagbar sind. Die dargestellten Werkstückauswerfer 11 befinden sich hier innerhalb des jeweiligen Werkzeugunterteiles 3. Für die Greiferklemmbewegung sind symbolisch zwei Arbeitszylinder 12 dargestellt im Bereich des eine Blechplatte oder einen Blechstreifen erfassenden Greifzeuges 10.

Der Bewegungszyklus der Transferschienen 4 beginnt beispielsweise mit der Schließbewegung in der voll ausgezogenen Stellung in einer Bewegungsrichtung senkrecht zur Zeichnungsebene, in dem die Transferschienen aufeinander zufahren. In dieser Schließstellung werden auch die Arbeitszylinder 12 der aktiven Greifzeuge betätigt. Mit der Hebebewegung der Transferschienen 4 in die Stellung 4' werden zugleich die Werkstückauswerfer 11 mit Druck aus den Druckaggregaten 9 beaufschlagt. Mit der Transferbewegung werden die Werkstücke in dem ersten bzw. nächsten Werkzeugunterteil abgelegt in der mit 4" entsprechend angedeuteten Stellung. Die aktiven Greifzeuge öffnen, die Werkstückauswerfer sind zurückgefahren oder werden mit der Werkstückablage zurückbewegt. Für die elektrische Steuerung der Motore 6, 7, 8 und den Steuerantrieb für die Werkzeugautomation 11 (21) und die Greiferbewegung 12 (22) ist der entsprechende elektrische und elektronische Schaltungs- bzw. Steuerungsaufwand in einem Schaltschrank 13 und einem frei beweglichen Hängesteuerpult 14 untergebracht. Für die Überwachung der richtigen Werkstückablage und des durchgeführten Werkstücktransportes sind z. B. berührungslose Schalter bzw. Sensoren 16, 15 in den Werkzeugunterteilbereichen angeordnet.

Die elektronische Steuerung zeigt einen Bedienbereich, beispielsweise eine Tastatur 17 für die Eingabe von Bediensignalen, z. B. Start-Stop-Signale, und einen Signalisationsbereich 18, in dem die aktuellen Betriebszustände der Einrichtung z. B. über Displays, Meßgeräte, Anzeigelampen u. dgl. sichtbar gemacht werden. Die Bediensignale werden über Eingangsbaugruppen in eine mit 19 positionierte speicherprogrammierbare Steuerung, wie sie aus der EP-PS 0 010 170 bekannt ist und im folgenden mit SPS bezeichnet wird, gegeben. Die Signale für die Signalisation werden von der SPS über Ausgangsbaugruppen abgegeben. Die SPS dient der Verarbeitung aller Betriebsdaten, dem Einschalten und der Freigabe der Antriebe, der Überwachung der Antriebsbewegungen und weiterhin dem Sperren des Bewegungsablaufes bei Auftreten von Störungen und Überschreiten unzulässiger Betriebsdaten. Die Verarbeitung erfolgt in Bit-Mustern vermittels Programmvorgabe, wobei ein Programm fortlaufend abgearbeitet wird. Dieses Programm ist veränderbar und an die jeweiligen, durch neue Werkzeuge vorgegebenen Situationen anzupassen. Neben den elektronischen Eingabe- und Ausgabebaugruppen umfaßt die SPS Programm- und Datenbausteine (Hardware der SPS) in logischer Verknüpfung zur Abarbeitung und Bereitstellung von Daten als Folge der jeweils an den Eingabebaugruppen anstehenden Daten. Ausgehend von einer festen Programmfolge für das neu einzurichtende Werkzeug werden hierbei Adressen und Informationen abgefragt und mit den anstehenden Eingangsinformationen in internen Registern aufbereitet, gespeichert und an den Ausgabebaugruppen bereitgestellt. Mit der SPS sind weiterhin über Eingabe-Ansgabebaugruppen der Datenverkehr mit der Werkzeugautomation 21, dem Greiferklemmbetrieb 22 und der Werkstücktransportkontrolle 23 abzuwickeln.

Der SPS ist eine numerische Steuerung mit Computer, eine sogenannte CNC 20, zugeordnet, wie sie in ähnlicher Weise in der Zeitschrift Steuerungstechnik, 3. Jg. (1970), Nr. 8, Seiten 254 bis 258 beschrieben worden ist. Diese stellt ein numerisches Steuerungssystem dar, um numerische Steuerfunktionen auszuführen. An die CNC sind über Eingabe- bzw. Eingabe- und Ausgabebaugruppen die Elngabetastatur 24 und eine Feineinstell- bzw. Genaueinstelleinrichtung 25, z. B. ein durch ein Handrad betätigbarer Weggeber 25, angeschaltet sowie die Baugruppen mit den Verstell- und Stellwertmitteln für die Verstellung und Positionsabfrage der Transferschienen 4 in den möglichen, hier drei Achsen. Der Weggeber 25 dient dem Überfahren der eingestellten Positionen der Transferschienen 4 in sehr kleinen Schritten. Jede der Baugruppen, 26 für den horizontalen Längstransport der Transferschienen, 27 für den Quertransport und 28 für die Vertikalbewegung (Heben, Senken), umfaßt einen der Motore 6, 7, 8 mit einer entsprechenden Motorregelung 34, einen mit der Motorwelle mitlaufenden Tachogenerator 31, ggf. eine Bremseinheit 32, Getriebemittel 33 sowie einen motorsynchronen Impulsgeber 36.

Die Einstellung der Bewegungen der Transferschienen 4 erfolgt über die Eingabetastatur 24 durch Aufruf der einzustellenden Achse 26, 27, 28 über das Tastenfeld 30, Vorgabe der Verstellgrößen (Wegemaße) sowie der Beschleunigungs- und Geschwindigkeitswerte über das Tastenfeld 35. Die schrittweise Freigabe der eingestellten Werte für die werkzeugbezogene Programmierung und zur Speicherung in der SPS kann erfolgen, nachdem über den Impulsgeber 36 der aktuelle Positionswert auf die CNC und über diese an die SPS 19 zurückgeführt worden ist. Bis zum Erreichen der vorgegebenen Position im Testlauf erfolgt in der CNC 20 ein Vergleich zwischen dem in der CNC anstehenden Soll-Wert und dem von dem Impulsgeber 36 kommenden Ist-Wert, der bei wertmäßiger Gleichheit zum Stillstand des Motors 6, 7, 8 der jeweils aufgerufenen Achse 26, 27, 28 zum Auslösen der Bremse 32 und einem Haltesignal führt.

Die über die CNC 20 eingestellte Geschwindigkeit wird vor Erreichen der Soll-Position verringert.

Die aktuellen Ist-Werte der Achsen werden in einem Display 37 im Bereich der Eingabetastatur 24 dargestellt. Für die leichte Zugänglichkeit (Bedienerfreundlichkeit) sind Eingabetastatur 24 und Display 37 in dem hängenden Steuerpult 14 integriert.

Die Werte für die Werkzeugautomation 21 und den Greiferklemmbetrieb 22 werden in Abhängigkeit von den Bewegungsphasen der Transferschienen über die CNC eingegeben und werden dann gleichfalls von der SPS gesteuert. Der Zeitpunkt der Ansteuerung ist für jede Funktion über die Eingabetastatur 24 programmierbar.

Die Kontrolle des Transportes der Werkstücke, Werkstückteiletransportkontrolle 23, ist unterteilt in eine Überfahrkontrolle mit den Schaltelementen 15 und in eine Lagekontrolle mit den Schaltelementen 16. Der Teiletransport wird programmtechnisch über die SPS 19 kontrolliert. Die Einzelbewegungen in den Achsen, die hiervon abhängigen Abläufe der Werkzeugautomation, der Steuerung der Klemmgreifer und der Teiletransportkontrolle sind über den Programmablauf der SPS zu einem in sich geschlossenen, jederzeit abrufbaren werkzeugorientierten Maschinenzyklus festgelegt.

Auch ist die Erfindung nicht festgelegt auf die gezeigte Ausführungsform. Anstatt der CNC sind andere Steuerungsmittel zur Positioniersteuerung, wie beispielsweise eine in der SPS integrierte oder auch unabhängig davon aufgebaute numerische Positioniersteuerung, denkbar. So ist es weiterhin u. a. möglich, in einer Leitmaschine einen die Transferbewegungen bewerkstelligenden Motor zu integrieren mit in Abhängigkeit der Presse bzw. der Stößelbewegung angepaßter Drehgeschwindigkeit. Zur winkelstellungs- bzw. zeitgerechten Abgabe von Signalen an die Achsantriebe dient hierbei ein drehgetriebener Impulsgeber. Die einzustellenden Bewegungen der Transferschienen in den Achsen sind dann von einem mitlaufenden Tachogenerator oder über eine CNC abfragbar.

**Patentansprüche**

1. Einrichtung zur Ermittlung von Soll-Werten für den vermittels Transferschienen durchzuführenden Transport von Werkstücken in einer Mehrstufenpresse und für die in Abhängigkeit von dem Werkstücktransport auszulösenden Bewegungen wie die Öffnen-Schließenbewegung von an den Transferschienen befindlichen Greifzeugen und die von Werkstückauswerfern bewirkte Auswerfbewegung der Werkstücke aus den Werkzeugunterteilen, gekennzeichnet durch einen elektrisch, mechanisch und örtlich getrennt von der Mehrstufenpresse aufgestellten Gestellaufbau (1, 2) zur Simulation dieser Bewegungen der Mehrstufenpresse, mit Antriebsmitteln wie einem Zentralantrieb oder Einzelmotoren (6, 7, 8), Bremsmitteln (32), Bewegungsumlenkmitteln wie Getriebe (33), Führungsmitteln (5) wie Schienen, Gleitführungen, Wälzlagerführungen und weiteren Mitteln wie Drehwellen, Lagern sowie mit Transferschienen (4) und von diesen getragenen, in der Mehrstufenpresse verwendbaren aktiven und passiven Greifzeugen (10), welche durch die genannten Mittel in gleicher Weise wie die Transferschienen und Greifzeuge der Mehrstufenpresse entlang von zwei oder drei Achsen bewegbar sind, wobei die Bewegungen der Transferschienen (4) des Gestellaufbaus in den Achsen nach Richtung und Länge und in Beschleunigung und Geschwindigkeit frei wählbar sind, mit Werkstückauswerfern (11), mit Mitteln wie Druckaggregaten (9), Steuerleitungen, Steuerventilen, Anpaßschaltungen (21, 22) für die Betätigung der Werkstückauswerfer (11) und für die Steuerung der Greifzeuge (10) und mit Mitteln wie Sensoren (15, 16) und einer Anpaßschaltung (23) zur Kontrolle des Transports der Werkstücke, unter Verwendung einer Programmsteuerschaltung (17, 18, 19, 20) zur Vorgabe, zur Verarbeitung und zur Speicherung von erfaßbaren und eingebbaren Daten zur Übertragung in einen Datensatz für die Mehrstufenpresse, in dem die Einzelbewegungen der Transferschienen in den Achsen, die hiervon abhängigen Abläufe des Werkstückauswurfs und der Steuerung der Greifzeuge und der Kontrolle des Werkstücktransports festgelegt sind.

2. Einrichtung nach Anspruch 1, dadurch gekennzeichnet, daß die Programmsteuerung (19, 20) eine Positioniersteuerung umfaßt mit werkstückspezifischer und pressenumfeldspezifischer Programmierung.

3. Einrichtung nach Anspruch 1, dadurch gekennzeichnet, daß die Programmsteuerung eine an sich bekannte CNC (20) ist, die werkstückspezifisch und umfeldspezifisch programmierbar ist, und eine der CNC (20) zugeordnete speicherprogrammierbare Steuerung (19) zur Verarbeirung der von der Peripherie (17, 18, 21, 22, 23) kommenden Signale und zur Steuerung der CNC (20), der Werkzeugautomation (21), der Greifzeuge (22), zur Transportkontrolle (23) und zur Ansteuerung des Antriebes (26, 27, 28) in zumindest zwei Achsen des Transports, wobei jede Achse ein Antriebsaggregat (6, 7, 8), einen Motorregelkreis (34) und einen Lage-Ist-Wertgeber (36) aufweist.

4. Einrichtung nach Anspruch 3, dadurch gekennzeichnet, daß der CNC (20) für den programmierbaren Bewegungsablauf Eingabebaugruppen (24) für die Werte dür die Bewegungsabläufe zur Programmierung in den Achsen und der Positions-Ist-Werte, Ausgabebaugruppen (34) für die Ausgabe von Daten an die einzelnen Achsen und zur Abgabe von stellungsbezogenen Signalen und Anzeigemittel (37) für die visuelle Wiedergabe der aktuellen Ist-Werte zugeordnet sind.

5. Einrichtung nach Anspruch 3, dadurch gekennzeichnet, daß der Steuerung (19, 20) Eingabe- und Ausgabebaugruppen zugeordnet sind für die Verarbeitung und Kontrolle der in der Peripherie (17, 18, 21, 22, 23) auftretenden Signale und zur Ansteuerung des CNC-Teiles (20), der Achsantriebe (26, 27, 28), der Werkzeugautomation (21), der Greiferbewegung (22) und der Werkstücktransportkontrolle (23).

6. Einrichtung nach einem oder mehreren der vorhergehenden Ansprüche, dadurch gekennzeichnet, daß dem CNC-Teil (20) eine zweigeteilte manuell betätigbare Soll-Wert-Eingabe (24) für den Einzelaufruf der Achsen und für die Vorgabe der minimalen und maximalen Verstellgrößen, Wegemaß, Beschleunigung, Geschwindigkeit zugeordnet ist sowie eine handgeführte Regeleinrichtung zum Verfahren der Transferschienen (4) in allen einzelnen Achsen.

7. Einrichtung nach Anspruch 6, dadurch gekennzeichnet, daß die dem CNC-Teil (20) zugeordnete Soll-Wert-Eingabe eine Tastatur (24) ist, mit einem Tastenfeld (30) für den Einzelaufruf der Achsen und einem Tastenfeld für die Eingabe der Verstellgrößen, daß der CNC-Teil (20) Ausgabebaugruppen aufweist zur Abgabe von Verfahr-Soll-Werten an die Achsen und Speichermittel aufweist zur Speicherung der an die Presse abzugebenden Daten.

8. Einrichtung nach Anspruch 1, dadurch gekennzeichnet, daß die Mittel zur Simulation einen Motor mit der Presse angepaßter Geschwindigkeit und einen Impulsgeber zur drehwinkelgerechten Abgabe von Befehlen an die Antriebsmittel umfassen.

## Claims

1. Apparatus for determining target values for the transport of workpieces, to be performed by means of transfer rails, in a multistage press and for the movements, to be activated as a function of the workpiece transport, such as the opening-closing movement of gripping devices, located on the transfer rails, and the ejecting movement, produced by workpiece ejectors, of the workpieces from the lower tool parts, characterized by a rack structure (1, 2), directed so as to be electrically, mechanically and locally separate from the multistage press, for simulating these movements of the multistage press, having drive means such as a central drive or individual motors (6, 7, 8), braking means (32), motion-reversal means such as gearing (33), guide means (5) such as rails, slideways, roller-bearing guides and further means such as rotary shafts and bearings, and also having transfer rails (4) and active and passive gripping devices (10) which are carried by these transfer rails (4), can be used in the multistage press and can be moved along two or three axes by the said means in the same manner as the transfer rails and gripping devices of the multistage press, the movements of the transfer rails of the rack structure along the axes being freely selectable according to direction and length and in acceleration and speed, having workpiece ejectors (11), means such as pressure units (9), control lines, control valves, adapting circuits (21, 22) for actuating the workpiece ejectors (11) and for controlling the gripping devices (10), and means such as sensors (15, 16) and an adapting circuit (23) for monitoring the transport of the workpieces, while using a program control circuit (17, 18, 19, 20) for presetting, processing and storing recordable and imputtable data for transfer into a data record for the multistage press, in which data record the individual movements of the transfer rails along the axes and the sequences, dependent thereon, of the workpiece ejection and the control of the gripping devices and the monitoring of the workpiece transport are fixed.

2. Apparatus according to Claim 1, characterized in that the program control (19, 20) comprises a positioning control having programming specific to the workpiece and the press environment.

3. Apparatus according to Claim 1, characterized in that the program control is a CNC (20) which is known per se and can be programmed specifically for the workpiece and the environment, and a stored-program control (19) allocated to the CNC (20) for processing the signals coming from the peripherals (17, 18, 21, 22, 23) and for controlling the CNC (20), the tool automation (21) and the gripping devices (22), for transport monitoring (23) and for controlling the drive (26, 27, 28) along at least two transporting axes, each axis having a drive unit (6, 7, 8), a motor control circuit (34) and an actual position transmitter (36).

4. Apparatus according to Claim 3, characterized in that allocated to the CNC (20) for the programmable sequence of motions are input modules (24) for the values for the sequences of motions for programming in the axes and the actual position values, output modules (34) for the output of data to the individual axes and for delivering signals related to position, and indicating means (37) for the visual reproduction of the actual values.

5. Apparatus according to Claim 3, characterized in that allocated to the control (19, 20) are input and out-put modules for processing and monitoring the signals appearing in the peripherals (17, 18, 21, 22, 23) and for controlling the CNC part (20), the axis drives (26, 27, 28), the tool automation (21), the gripper movement (22) and the workpiece transport monitoring (23).

6. Apparatus according to one or more of the preceding claims, characterized in that a two-part, manually operable target-value input (24) for the individual retrieval of the axes and for the presetting of the minimum and maximum adjusting variables, path displacement, acceleration and speed, and also a manually guided control device for traversing the transfer rails (4) in all individual axes are allocated to the CNC part (20).

7. Apparatus according to Claim 6, characterized in that the target-value input allocated to the CNC part (20) is a keyboard (24), having a set (30) of keys for the individual retrieval of the axes and a set of keys for entering the adjusting variables, that the CNC part (20) has output modules for delivering desired traverse values to the axes and has storage means for storing the data to be delivered to the press.

8. Apparatus according to Claim 1, characterized in that the simulating means comprise a motor having a speed adapted to the press and an impulse transmitter for delivering, at the correct angle of rotation, commands to the drive means.

## Revendications

1. L'invention concerne une installation pour établir des valeurs de consigne pour le transport, à effectuer au moyen de rails de transfert, de pièces à usiner dans une presse à plusieurs étages et pour les mouvements à déclencher en fonction du transport des pièces, comme le mouvement d'ouverture-fermeture de pinces se trouvant sur les rails de transfert et le mouvement d'extraction des pièces hors des parties inférieures de l'outil, mouvement réalisé par les extracteurs de pièces, caractérisée par une structure de bâti (1, 2), pour la simulation de ces mouvements de la presse à plusieurs étages, comportant des moyens d'entraînement comme un mécanisme central d'entraînement ou des moteurs isolés 6, 7, 8, des moyens de freinage (32), des moyens de changement de direction comme des mécanismes (33), des moyens de guidage (5) avec des rails, des guidages lisses, des guidages à roulements à rouleaux et d'autres moyens comme des arbres tournants, des paliers, ainsi que des rails de transfert (4) et des pinces (10) actives et passives, portées par les rails de transfert et pouvant s'employer dans la presse à plusieurs étages, qui peuvent se déplacer, grâce aux moyens mentionnés, de la même façon que les rails de transfert et les pinces de la presse à plusieurs étages, le long de deux ou trois axes, étant précisé que les mouvements des rails de transfert (4) de la structure de bâti selon les axes peuvent être librement choisis en direction et en longueur et en accélération et en vitesse, comportant aussi des extracteurs de pièces (11), comportant aussi des moyens, comme des groupes de pression (9), des conduites de commande, des vannes de commande, des circuits d'adaptation (21, 22) pour la manœuvre des extracteurs de pièces (11) et pour la commande des pinces (10) et comportant aussi des moyens comme des détecteurs (15, 16) et un circuit d'adaptation (23) pour la commande du transport des pièces, ceci avec emploi d'un circuit de commande de programmation (17, 18, 19, 20) pour prescrire, traiter et mémoriser des données qui peuvent être saisies et entrées pour transmission dans un ensemble de données pour la presse à plusieurs étages, ensemble de données dans lequel sont déterminés les différents mouvements des rails de transfert selon les axes, les séquences d'intervention, qui en dépendent, de l'extracteur des pièces, ainsi que la commande des pinces et la commande du transport des pièces.

2. Installation selon la revendication 1, caractérisée en ce que la commande de programmation (19, 20) comporte une commande de positionnement avec programmation spécifique de la pièce et spécifique de l'environnement de la presse.

3. Installation selon la revendication 1, caractérisée en ce que la commande de programmation est une commande CNC (20) connue en soi, que l'on peut programmer en fonction spécifique de la pièce et en fonction spécifique de l'environnement de la presse, et comporte une commande programmable à mémoire (19), correspondant à la commande CNC (20), pour traiter les signaux provenant des périphériques (17, 18, 21, 22, 23) et pour commander la commande CNC (20), la commande automatique de l'outil (21), les pinces (22), pour la commande de transport (23) et pour la commande de l'entraînement (26, 27, 28) selon au moins deux axes de transport, chaque axe présentant un groupe d'entraînement (6, 7, 8), un circuit de régulation du moteur (34) et un émetteur de la valeur réelle de la position (36).

4. Installation selon la revendication 3, caractérisée en ce qu'à la commande CNC (20) pour le déroulement programmable du mouvement correspondent des modules d'entrée (24) pour les valeurs correspondant aux séquences de déroulement du mouvement pour la programmation selon les axes et pour les valeurs réelles de la position, ainsi que des modules de sortie (34) pour l'édition de données concernant les différents axes et pour l'émission de signaux relatifs à la position, ainsi que des moyens de visualisation (37) pour permettre la visualisation des valeurs réelles.

5. Installation selon la revendication 3, caractérisée en ce qu'à la commande (19, 20) correspondent des modules d'entrée et de sortie pour le traitement et la commande des signaux apparaissant dans les périphériques (17, 18, 21, 22, 23) et pour le pilotage de la partie CNC (20), des mécanismes d'entraînement des axes (26, 27, 28) du circuit automatique de commande des outils (21), du déplacement des pinces (22) et pour la commande du transport des pièces (23).

6. Installation selon une ou plusieurs des revendications précédentes, caractérisée en ce qu'à la partie CNC (20) correspond une entrée (24) de valeur de consigne, manœuvrable manuellement en deux parties, pour l'appel individuel des axes et pour la prescription des valeurs minimales et maximales de réglage, cote de course, accélération, vitesse, ainsi qu'un mécanisme de réglage conduit à la main pour déplacer les rails de transfert (4) selon les différents axes.

7. Installation selon la revendication 6, caractérisée en ce que l'entrée de valeur de consigne correspondant à la partie CNC (20) est un clavier (24) comportant une zone (30) du clavier pour l'appel individuel des axes et une zone du clavier pour l'entrée des valeurs de réglage ; en ce que la partie CNC (20) présente des modules de sortie pour émettre des valeurs de consigne de déplacement concernant les axes et présente des moyens de mémorisation pour mémoriser les données à envoyer à la presse.

8. Installation selon la revendication 1, caractérisée en ce que les moyens prévus pour la simulation comprennent un moteur avec vitesse adaptée à la presse et un émetteur d'impulsions pour envoyer, en fonction de la vitesse de rotation, des instructions aux moyens d'entraînement.

FIG . 1

EP 0 147 480 B1

FIG. 2

EP 0 147 480 B1